# EUROPEAN PATENT APPLICATION

(11) **EP 2 093 673 A1**
(43) Date of publication of application: **26.08.2009**
(21) Application number: 07800937.0
(22) Date of filing: 13.08.2007
(51) Int. Cl.: G06F 12/08

(54) **A SYSTEM AND METHOD WITH MULTI-LEVEL BUFFER**

(30) Priority: 15.12.2006 CN 200610157665
(71) Applicant: Huawei Technologies Co., Ltd., Shenzhen, Guangdong Province 518129 (CN)
(72) Inventor: QIN, Xiaopeng, Shenzhen Guangdong 518129 (CN); ZHAO, Xiaohua, Shenzhen Guangdong 518129 (CN)
(74) Representative: Körber, Wolfhart
(86) International application number: PCT/CN2007/070461
(87) International publication number: WO 2008/071096

(57) **Abstract**

The present invention relates to storage technologies in the data communication field, and in particular, to a storage system and method with a multi-level buffer. A system provided in an embodiment of the present invention includes a first level storage cell, a hard disk, and a control module. The first level storage cell is a disk buffer for temporarily storing the data to be read or written. The control module is adapted to control the read-write operations of data. A second level storage cell is adapted to: write the temporarily stored data in the first level storage cell into the second storage cell according to an instruction from the control module; and store the data into the hard disk, when the aggregate of the data written in the second level storage cell reaches a set threshold. The system and the method disclosed herein enhance protection for the hard disk, prolong the service life of the hard disk, and improve the reliability and stability of the storage system.

## Description

This application claims a priority from the Chinese Patent Application No. 200610157665.9, filed with the Chinese Patent Office on December 15, 2006 and entitled "Storage system and Method with Multi-level Buffer", the contents of which are incorporated herein by reference in their entirety.

### FIELD OF THE INVENTION

The present invention relates to storage technologies in the data communication field, and in particular, to a storage system and method.

### BACKGROUND

Currently, hard disk has merits of mature technology, huge storage size, and convenient application. Therefore, many systems tend to use hard disks as a primary storage medium for storing various data of the system.

It is well known that hard disks are high-precision devices, and impose strict requirements and restrictions on the environments and methods of using the hard disks. The life of an ordinary hard disk for civil purposes is about 20,000 hours. In a hard disk manual, the operation restrictions are generally specified: The daily power-on duration should not be greater than 10 hours, and the read-write duty ratio should be less than 20%. In practice, the system generally uses a portion of the storage as a disk buffer of the hard disk or its equivalent device, such as Compact Flash (CF) card and USB flash disk. The disk buffer is used to buffer the read-write operation data in order to reduce the count of access to the hard disk or equivalent device.

In certain scenarios, some devices need to run in a long period and store some data of a moderate size (such as logs) in the running process, with a moderate frequency of reading and writing. Such devices tend to work for several months or several years without interruption. In such a system, if a hard disk used to store data continuously or irregularly, the hard disk has to be powered on in a long period, or even has to work 24 hours a day. Such a work state violates the basic working requirements of the hard disk seriously, and shortens the life of the hard disk drastically, thus leading to a low reliability of the storage system.

### SUMMARY

A storage system and method disclosed in embodiments of the present invention to enhance protection for the hard disk, prolong the service life of the hard disk, and improve the reliability and stability of the storage system.

A storage system provided in an embodiment of the present invention includes: a first level storage cell, a hard disk, and a control module. The first level storage cell is a disk buffer for temporarily storing the data that needs to be read or written. The control module is adapted to control the read-write operations of data.

The storage system further includes a second level storage cell, adapted to: write the temporarily stored data in the first level storage cell into the second storage cell according to an instruction from the control module; and store the data into the hard disk, when the aggregate of the data written in the second level storage cell reaches a set threshold.

A storage methodwith a multi-level buffer in an embodiment of the present invention includes:

writing temporarily stored data in the first level storage cell into the second level storage cell; judging whether the aggregate of the data in the second level storage cell reaches a set threshold; and storing the data in the second level storage cell into the hard disk if the threshold is reached.

The system under the present invention provides a second level storage cell which complements the hard disk. By enlarging the capacity of the second level storage cell, the hard disk is able to be in the power-off state for a long period during the process of storing the system data, and even only needs to be powered on once in several weeks when a small amount of data is stored each day. The hard disk finishes storing the data required by the system in only several minutes after power-on. This solution reduces the working time of the hard disk and prolongs the service life of the hard disk greatly. Meanwhile, the second level storage cell constitutes a 1+1 redundancy backup of the hard disk and verse versa (that is, when the second level storage cell fails, the hard disk performs the read-write operation independently; when the hard disk fails, the second level storage cell performs the read-write operation independently). When the second level storage cell or hard disk is damaged, the storage function is undertaken by another undamaged storage cell independently through a fault management method and switchover policies, thus keeping system operation without interruption. Therefore, the redundancy backup mode enhances the reliability and stability of the whole storage system significantly.

### BRIEF DESCRIPTION OF THE DRAWINGS

Figure 1 shows a structure of a storage system in an embodiment of the present invention;

Figure 2 is a simplified flowchart of a storage method provided in an embodiment of the present invention; and

Figure 3 shows an active process of a storage method provided in an embodiment of the present invention.

### DETAILED DESCRIPTION

The present invention relates to data storage technologies in the data communication field, and provides a storage system and method with a multi-level buffer. The storage system and method disclosed herein are primarily applicable to scenarios with a moderate size of data storage, and can prolong the service life of the hard disk and improve the stability and reliability of the system.

In order to make the technical solution, objectives, and merits of the present invention clearer, the present invention is hereinafter described in detail by reference to accompanying drawings and preferred embodiments. It is understandable that the embodiments herein are for the exemplary purpose only, and are not intended to limit the present invention.

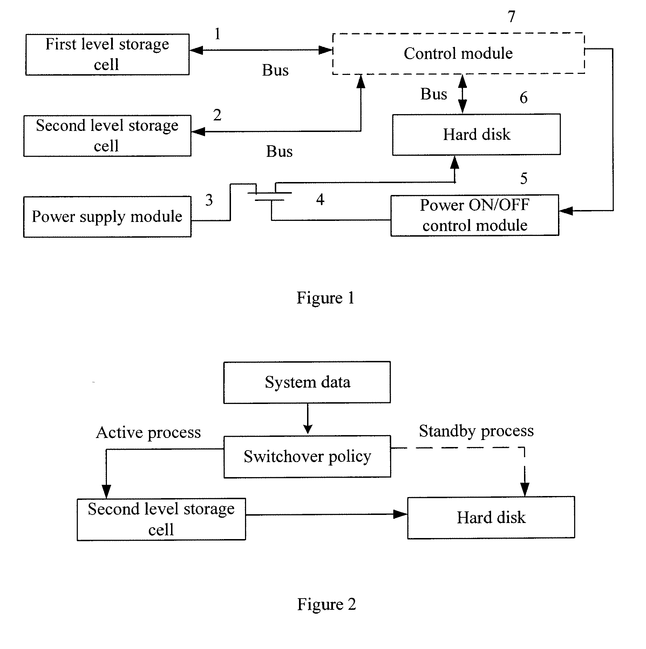

Figure 1 shows a structure of a storage system in an embodiment of the present invention. The system includes: a first level storage cell 1, a second level storage cell 2, a power supply module 3, a power component 4, a power ON/OFF control module 5, a hard disk 6, and a control module 7. The control module 7 provides the functions of a central processing unit, and controls the whole process of storing data.

The first level storage cell 1 is a disk buffer. It is generally a Double Data Rate SDRAM (DDR), or a Non-Volatile Random Access Memory (NVRAM), or a component of a similar function, and is a temporary data storage area provided by the system for the hard disk, CF card or an equivalent disk device. In the present invention, the first level storage cell 1 provides a temporary data storage area primarily for the second level storage cell 2, or, in special circumstances, for the hard disk 6, for example, when the second level storage cell fails and the hard disk stores data independently.

The second level storage cell 2 is a Flash storage chip, or another storage component which uses the Flash technology as a core technology, including but not limited to: CF card, Disk On Module (DOM) electronic disk, and Disk On Chip (DOC) electronic disk. Such storage components based on the Flash technology have no mechanical component inside, and their service life is related only to the count of erasing and writing, and is not sensitive to the power-on time.

The power supply module 3 provides the hard disk with power supply.

The power component 4 is adapted to control connection and disconnection of the power supply of the hard disk, and is generally a MOS tube or another component with the switch function.

The power ON/OFF control module 5 is a logic unit for controlling power ON/OFF of the hard disk, and can control the power component 4 to connect or disconnect the power supply of the hard disk according to an instruction from the control module.

The hard disk 6 is adapted to receive the data imported by the second level storage cell 2, and undertake the operation of reading and writing data independently when the second level storage cell 2 fails.

The system in an embodiment of the present invention works in this way:
After the system is started, the data that needs to be stored is generated.
The data is written into the first level storage cell 1.
When determining that the data stored in the first level storage cell accrues to a certain amount, the control module 7 issues an instruction to store the data in the first level storage cell 1 into the second level storage cell 2.
The system keeps writing data.
When the control module 7 determines that the amount of data stored in the second level storage cell 2 reaches a set threshold (for example, reaches 80% or 90% of the storage capacity of the second level storage cell), the control module 7 issues an instruction so that the power ON/OFF control module 5 controls the power component 4 to connect the hard disk 6 with the power supply, thus powering on the hard disk 6.
Upon completion of power-on, the control module 7 initializes the hard disk 6, and then imports all the data stored in the second level storage cell 2 into the hard disk.
Upon completion of importing, the control module 7 powers off the hard disk through the power ON/OFF control module 5, and clears the second level storage cell 2.

In the normal working state, the hard disk 6 in the storage system in this embodiment is generally powered off and idle. The hard disk is powered on and imports data only when the amount of data in the second level storage cell 2 reaches a set threshold. Therefore, the system under the present invention reduces the actual operation time of the hard disk and prolongs the service life of the hard disk massively. Besides, the second level storage cell 2 is capable of storing data independently. When the hard disk 6 or the second level storage cell 2 fails, the control module 7 may instruct the normal storage device (hard disk or second level storage cell) to store the data independently. The redundancy backup of the storage device enhances the stability and reliability of the whole system.

Figure 2 is a simplified flowchart of a storage method provided in an embodiment of the present invention. This embodiment is applicable to the system shown in Figure 1. The flowchart reveals that in this embodiment, the data is primarily stored by the second level storage cell independently (active process). When the second level storage cell fails, the data storage operation is switched over to the hard disk according to the switchover policy, and the hard disk performs the operation of storing data independently (standby process). When the second level storage cell recovers from the failure, the control module recovers the active process according to the switchover policy. The active process and standby process are detailed below.

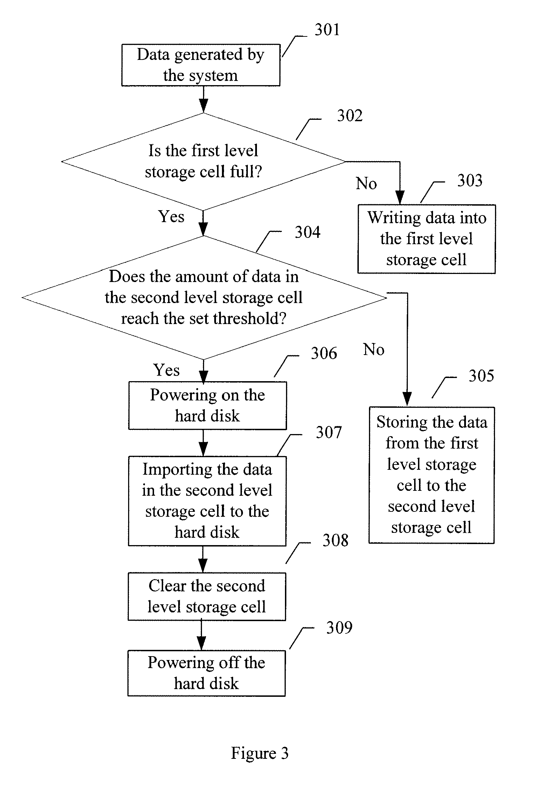

Figure 3 shows the active process of a storage method provided in an embodiment of the present invention. The method includes the following steps:

301. The system generates the data that need to be stored.

As mentioned above, the method under the present invention is primarily applicable to the scenarios with a moderate amount of data to be stored. For example, the data here may be system operation logs.

302. Before writing the data that needs to be stored into the first level storage cell, the control module judges whether the first level storage cell is full. If the first level storage cell is not full, the process proceeds with step 303; otherwise, the process proceeds with step 304.

303. The data that need to be stored in step 301 are written into the first level storage cell as dictated by the control module.

In the foregoing steps, the first level storage cell being full is not a necessary condition of writing the data in the first level storage cell to the second level storage cell. The user may set other conditions as required, and step 304 is performed when such conditions are fulfilled.

304. Before writing the data in the first level storage cell to the second level storage cell, the control module judges whether the aggregate of the data in the second level storage cell reaches a set threshold. If the threshold is not reached, the control module continues with the process of writing data; if the threshold is reached, the process proceeds with step 306.

305. As dictated by the control module, the data in the first level storage cell are written to the second level storage cell, and then the data in the first level storage cell are cleared.

In the foregoing step, the control module also needs to judge whether the second level storage cell has enough space for writing the contents from the first level storage cell. If the storage space is enough, the writing operation is performed; if the storage space is not enough, the contents in the second level storage cell need to be imported to the hard disk before the writing operation.

The threshold is intended to prevent loss of data after the second level storage cell is full. The threshold should not be too low. If the threshold is too low, the hard disk is powered on and off frequently, which disrupts the purpose of protecting the hard disk.

306. According to an instruction from the control module, the power ON/OFF control module issues an instruction for connecting the power supply of the hard disk, and the power component connects the power supply to power on the hard disk.

307. After the hard disk is powered on, the data in the second level storage cell is imported into the hard disk according to an instruction from the control module.

308. After all the data in the second level storage cell is imported into the hard disk, the control module clears the second level storage cell.

309. As dictated by the control module, the power ON/OFF control module issues an instruction for disconn ecting the power supply of the hard disk, and the power component disconnects the power supply to power off the hard disk.

Step 308 and step 309 are not sequence-sensitive. Therefore, the control module may power off the hard disk before clearing the second level storage cell.

Described above is an active process of writing data. In the foregoing process, the detailed process of powering on the hard disk includes: Through a power ON/OFF control module, the control module controls the power component to connect the power supply to power on the hard disk, and then initializes the hard disk according to the initialization process specified in the hard disk manual. The result of the power-on operation is: The hard disk is in the available state, namely, available for reading and writing. The process of powering off the hard disk includes: The control module shuts down the hard disk according to the process specified in the hard disk manual, and then makes the power component power off the hard disk through the power ON/OFF control module.

In addition, a process of reading data is disclosed herein. When the system needs to read data, the control module searches the second level storage cell, and judges whether any data needs to be read. If no data needs to be read, the control module further judges whether the hard disk is powered on. If the hard disk is not powered on, the control module instructs the power ON/OFF control module to power on the hard disk through the power component. Afterwards, the control module searches the hard disk for the data to be read, and reads the data. Upon completion of reading the data, the control module instructs the power ON/OFF control module to power off the hard disk through the power component so that the hard disk recovers the idle state.

An exception processing process is also provided in this embodiment, including a hard disk exception processing process and a second level storage cell exception processing process (standby process shown in Figure 2).

The hard disk exception processing process includes: When the control module reads or writes data in the hard disk, the control module may check correctness of the read or written data through real-time detection, triggered detection, or periodical detection. If any exception of reading or writing is found, the hard disk is regarded as failed. In this case, the control module gives up operating the hard disk, and sends a hard disk exception alarm to require repair of the hard disk. After sending a hard disk exception alarm, the control module detects whether a hard disk exists in the system periodically according to the fault detection timer. If a hard disk is found, the control module initializes the hard disk. If the initialization succeeds, the control module determines that the hard disk fault is removed, and cancels the hard disk alarm state and recovers the normal reading and writing process (namely, after the aggregate of data in the second level storage cell reaches a set threshold, importing the data in the second level storage cell onto the hard disk; or if no desired data can be found in the second level storage cell, searching the hard disk for the desired data).

The second level storage cell exception processing process includes: When reading or writing data in the second level storage cell, the control module may check correctness of the read or written data through real-time detection, triggered detection, or periodical detection. If any exception of reading or writing is found, the control module regards the second level storage cell as failed, and triggers the switchover policy. First, the control module judges whether the hard disk is powered on: if the hard disk is powered on, the control module reads and writes data through the hard disk directly; if the hard disk is powered off, the hard disk is powered on according to an instruction from the control module. Upon completion of power-on, the control module reads and writes data through the hard disk directly, and sends a second level storage cell exception alarm to require repair of the second level storage cell. After sending a second level storage cell exception alarm, the control module detects whether a second level storage cell exists in the system periodically according to the fault detection timer. If a second level storage cell is found, the control module initializes the second level storage cell. If the initialization succeeds, the control module determines that the second level storage cell fault is removed, and cancels the second level storage cell alarm state. After a read-write operation on the hard disk is finished, the control module switches the next read-write operation over to the second level storage cell. The power control module instructs the power component to power on and off the hard disk through the power ON/OFF control module.

Through the foregoing system and method, if only a small amount of data needs to be stored everyday, the hard disk is in the power-off state for a long period during the process of storing system data while the system is running, thus reducing the working time of the hard disk and prolonging the service life of the hard disk. Moreover, when any fault occurs, the second level storage cell constitutes a backup of the hard disk and verse versa. That is, when the second level storage cell fails, the hard disk performs the read-write operation independently; when the hard disk fails, the second level storage cell performs the read-write operation independently, thus enhancing the stability and reliability of the system.

Although the invention is described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A storage system with a multi-level buffer, **characterized by** comprising a first level storage cell, a hard disk, and a control module, wherein:
the first level storage cell is a disk buffer and adapted to temporarily store data to be read/written; and the control module is adapted to control read-write operations of the data;
and the storage system further comprising:
a second level storage cell, adapted to store the temporarily stored data in the first level storage cell according to an instruction from the control module; and
store the data into the hard disk when an aggregate of the data in the second level storage cell reaches a set threshold.

2. The storage system of claim 1, **characterized by** further comprising:
a power supply module, adapted to provide the hard disk with power supply;
a power ON/OFF control module, adapted to control a power component to connect or disconnect the power supply of the hard disk according to an instruction from the control module;
the power component, adapted to control connection and disconnection of the power supply provided by the power supply module according to a receivedinstruction.

3. The storage system of claim 1 or claim 2, **characterized in that:**
the second level storage cell is a storage component based on a Flash technology serving as a core technology; and types of the second level storage cell comprise but are not limited to: Compact Flash, CF, card, Disk On Module, DOM, electronic disk, and Disk On Chip, DOC, electronic disk.

4. A storage method with a multi-level buffer, **characterized by** comprising:
writing temporarily stored data in a first level storage cell into a second level storage cell; and
judging whether an aggregate of the data stored in the second level storage cell reaches a set threshold; and if the threshold is reached, storing the data in the second level storage cell into a hard disk.

5. The method of claim 4, **characterized in that** the process of storing the data in the second level storage cell into the hard disk comprises:
powering on and initializing the hard disk;
storing the data in the second level storage cell into the hard disk; and
powering off the hard disk.

6. The method of claim 4, **characterized in that** after storing the data in the second level storage cell into the hard disk, the method further comprises:
deleting the data which has been stored into the hard disk in the second level storage cell.

7. The method of claim 4 or claim 6, **characterized by** further comprising a process of reading the data:
if the data that to be read is not in the second level storage cell,
searching the hard disk for the data to be read in the case that the hard disk is powered on, and reading the data;
powering on the hard disk in the case that the hard disk is powered off, searching the hard disk for the data to be read, and reading the data; and
powering off the hard disk upon completion of reading.

8. The method of claim 4 or claim 6, **characterized by** further comprising:
checking a working state of the second level storage cell when performing read-write operations on the second level storage cell; and
if the second level storage cell fails, controlling the hard disk powered on and the hard disk performing a read-write operation in place of the second level storage cell, and sending a second level storage cell alarm notification.

9. The method of claim 8, **characterized by** further comprising a failover step:
periodically judging whether the second level storage cell failed is existent; if existent, judging whether the second level storage cell is recovered;
if the second level storage cell failed is recovered, initializing the recovered second level storage cell; upon completion of initialization, referring the next read-write operation to the second level storage cell after a current read-write operation on the hard disk is finished; and then powering off the hard disk.

10. The method of claim 4 or claim 6, **characterized by** further comprising:
checking a working state of the hard disk when performing read-write operations on the hard disk; and
if the hard disk fails, performing the read-write operation on the second level storage cell, and sending a hard disk alarm notification.

11. The method of claim 10, **characterized by** further comprising a failover step:
periodically judging whether the hard disk failed is existent; if existent, judging whether the hard disk is recovered; and
if the faulty hard disk is recovered, importing the data in the second level storage cell to the hard disk when the aggregate of the data in the second level storage cell reaches the set threshold.
